# EUROPEAN PATENT SPECIFICATION

(11) **EP 4 080 818 B1**
(45) Date of publication and mention of the grant of the patent: **24.07.2024**
(21) Application number: 21206903.3
(22) Date of filing: 08.11.2021
(51) Int. Cl.: H04L 9/40

(54) **COMMUNICATION METHOD AND DEVICE, ECU, VEHICLE AND STORAGE MEDIUM**
KOMMUNIKATIONSVERFAHREN UND -VORRICHTUNG, ECU, FAHRZEUG UND SPEICHERMEDIUM
PROCÉDÉ ET DISPOSITIF DE COMMUNICATION, UNITÉ DE COMMANDE ÉLECTRONIQUE, VÉHICULE ET SUPPORT D'ENREGISTREMENT

(30) Priority: 19.04.2021 CN 202110420141
(43) Date of publication of application: 26.10.2022
(73) Proprietor: Guangzhou Xiaopeng Motors Technology Co., Ltd., Tianhe District Guangzhou Guangdong (CN)
(72) Inventor: LIANG, Ling, Guangzhou (CN); SUN, Jiajia, Guangzhou (CN); SUN, Wei, Guangzhou (CN); DUAN, Zhifei, Guangzhou (CN); JIAO, Qingchun, Guangzhou (CN)
(74) Representative: Ran, Handong

(56) References cited:
- WO-A1-2020/219128
- US-A1- 2020 007 319
- US-A1- 2020 162 436
- US-A1- 2020 177 398

## Description

### Field of Invention

The present invention relates to the technical field of vehicles, in particular to a communication method and device, an ECU, a vehicle and a storage medium.

### Background

As vehicles become more and more interconnected, more and more attentions are being paid to security of in-vehicle communication. In related technologies, most communications among electronic control units (ECUs) in a vehicle are based on a controller area network (CAN) or a CAN with flexible data-rate (CANFD). Generally, ECUs transmit data to each other by broadcasting. However, almost all data is transmitted in plaintext, and the ECUs utilize a relatively simple manner of verifying the received data, making the data easy to be cracked by a third party. The third party may crack a communication protocol in the vehicle and then imitate corresponding messages to control the vehicle, which may result in reduced security of in-vehicle communication and may further affect personal safety of drivers.

WO 2020/219128 A1 discloses systems and methods for secure communications. The system includes a first controller configured to generate a network key and transform the network key and a second controller configured to obtain the transformed network key and form a network with the first controller. Each of the first controller and the second controller is configured to generate a same symmetric key using the network key and values from the other of the first controller and second controller.

US 2020/177398 A1 discloses a system including a certification authority and a vehicle-mounted computer mounted in a vehicle. The certification authority includes a certification authority key storage that stores a certification authority public key certificate and a certification authority private key, a first communicator that receives an issuance request that is configured to request issuance of a vehicle-mounted computer public key certificate, and a vehicle-mounted computer public key certificate issuer that is configured to apply a signature to the vehicle-mounted computer public key included in the issuance request with the certification authority private key and issue the vehicle-mounted computer public key certificate. The first communicator is configured to transmit the vehicle-mounted computer public key certificate to the vehicle-mounted computer that is a transmission source of the issuance request. The vehicle-mounted computer includes a vehicle-mounted computer key generator and a public key certificate acquirer.

US 2020/162436 A1 describes a system and method for managing communications between modules in a Controller Area Network (CAN) in a secure manner. In particular, the system employs a hierarchical key generation method that allows a module in the CAN to use a single ascendant key together with relevant identifiers to generate descendant keys for CAN identities in the Controller Area Network. These keys are then used by the broadcasting and receiving CAN modules to authenticate published messages.

### Summary of Invention

In view of this, the present invention provides a communication method, a communication device, an ECU, a vehicle and a storage medium. The invention is set out in the appended set of claims.

In a first example, there is provided a communication method applicable to a first electronic control unit (ECU) of a vehicle, wherein the vehicle further includes a second ECU, and the method includes: sending first state information to the second ECU when communication state information of the first ECU against the second ECU is the first state information, wherein the first state information is configured to indicate that a communication state between the second ECU and the first ECU is a communication unauthorized state and the second ECU needs to perform communication verification with the first ECU; sending verification information to the second ECU when a communication verification request sent by the second ECU based on the first state information is received; receiving feedback information sent by the second ECU based on the verification information; and when the feedback information conforms to a preset rule, changing the communication state information to second state information and sending to the second ECU an encryption key assigned to the second ECU, wherein the second state information is configured to indicate that the communication state between the second ECU and the first ECU is a communication authorized state, and wherein the encryption key is configured to encrypt messages in a communication process between the first ECU and the second ECU.

In a second example, there is provided a communication device applicable to a first ECU of a vehicle, wherein the vehicle further includes a second ECU, and the device includes: a state information sending module, a verification information sending module, an information receiving module and a key distribution module. The state information sending module is configured to send first state information to the second ECU when communication state information of the first ECU against the second ECU is the first state information, wherein the first state information is configured to indicate that a communication state between the second ECU and the first ECU is a communication unauthorized state and the second ECU needs to perform communication verification with the first ECU. The verification information sending module is configured to send verification information to the second ECU when a communication verification request sent by the second ECU based on the first state information is received. The information receiving module is configured to receive feedback information sent by the second ECU based on the verification information. The key distribution module is configured to, when the feedback information conforms to a preset rule, change the communication state information to second state information and send to the second ECU an encryption key assigned to the second ECU, wherein the second state information is configured to indicate that the communication state between the second ECU and the first ECU is a communication authorized state, and wherein the encryption key is configured to encrypt messages in a communication process between the first ECU and the second ECU.

In a third example, there is provided an ECU, including: one or more processors, memory, and one or more programs, wherein the one or more programs are stored in the memory and are configured to be executed by the one or more processors, and the one or more programs are configured to perform the communication method provided in the first aspect.

In a fourth example, there is provided a vehicle including a vehicle body and the above ECUs arranged in the vehicle body.

In a fifth example, there is provided a computer-readable storage medium having stored thereupon program codes, which may be called by a processor to perform the communication method provided in the first aspect.

In solutions provided in the present invention, when communication state information of the first ECU against the second ECU is first state information, the first state information is sent to the second ECU, wherein the first state information is configured to indicate that the communication state between the second ECU and the first ECU is a communication unauthorized state and the second ECU needs to perform communication verification with the first ECU. If a communication verification request sent by the second ECU based on the first state information is received, verification information is sent to the second ECU. Feedback information sent by the second ECU based on the verification information is received. The communication state information is changed to second state information when the feedback information conforms to a preset rule, and an encryption key is sent to the second ECU, wherein the second state information is configured to indicate that the communication state between the second ECU and the first ECU is a communication authorized state, and the encryption key is configured to encrypt messages during the communication process between the first ECU and the second ECU. In this way, it is ensured that messages in the communication between the ECUs are encrypted by the encryption key to improve security, and communication verification is performed before the ECUs have a same encryption key, and the ECUs get the same encryption key and communicate with each other only after the communication verification, thereby improving communication security between the ECUs.

### Brief Description of Drawings

In order to allow technical solutions of the present invention to be more clearly illustrated, the accompanying drawings which need to be used in the description of the embodiments will be described briefly below. Apparently, the accompanying drawings in the description below are merely some embodiments of the present invention, for those skilled in the art, other drawings can be obtained according to these drawings without any creative effort.
Fig. 1 is a diagram showing a hardware environment of a communication method provided in an embodiment of the present invention.
Fig. 2 is a flow chart of a communication method provided in an embodiment of the present invention.
Fig. 3 is a flow chart of a communication method provided in another embodiment of the present invention.
Fig. 4 is a schematic diagram of a message format in the present invention.
Fig. 5 is a flow chart of sub-steps of step S270 shown in Fig. 3 in an implementation.
Fig. 6 is a flow chart of sub-steps of step S270 shown in Fig. 3 in another implementation.
Fig. 7 is a flow chart of a communication method provided in another embodiment of the present invention.
Fig. 8 is a flow chart of a communication method provided in still another embodiment of the present invention.
Fig. 9 is a flow chart of interactive implementation of a communication method provided in an embodiment of the present invention.
Fig. 10 is a block diagram of a communication device provided in an embodiment of the present invention.
Fig. 11 is a block diagram of an ECU for implementing a communication method according to an embodiment of the present invention provided in an embodiment of the present invention.
Fig. 12 is a structural schematic diagram of a vehicle provided in an embodiment of the present invention.
Fig. 13 is a storage unit configured to store or carry program codes for implementing a communication method in an embodiment of the present invention provided in an embodiment of the present invention.

### Detailed Description

In order to enable those skilled in the art to better understand solutions of the present invention, a clear and thorough description of technical solutions of the present invention will be given below in combination with the accompanying drawings.

In technologies related to in-vehicle network, a vehicle includes multiple ECUs, which are the most important components for controlling a system in the vehicle. Moreover, different ECUs exchange data with each other through CAN or CANFD communication, and each item of the data transmitted in the vehicle is crucial to the life security of the driver. However, information security is not taken into account in the design of CAN or CANFD. When using a CAN bus network for data broadcasting, information in a message is transmitted in plaintext. Therefore, the CAN bus network cannot ensure confidentiality of CAN data frames and the authentication of CAN data frames by ECUs, such that malicious attackers may easily steal data or perform replay attacks, thereby further threatening the life security of the driver.

Based on this, in practice, control messages are encrypted in advance and then the encrypted control messages are transmitted between different ECUs to improve confidentiality of the messages. However, since a fixed key has been used for encryption. Once the key is intercepted by a third party, messages during transmission may also be stolen, which in turn leads to a replay attack by the third party on internal communication of the vehicle, thereby affecting life security of the driver.

For above problems, the inventors propose a communication method and device, an ECU, a vehicle and a storage medium, which can encrypt messages communicated between ECUs through an encryption key to improve security, and ensure that the communication method can resist replay attacks through designing the format of a security check field. That is, even if a message of a vehicle is replayed, an ECU can identify that the message is an illegitimate message, thereby improving security of in-vehicle communication. The contents will be described in detail below.

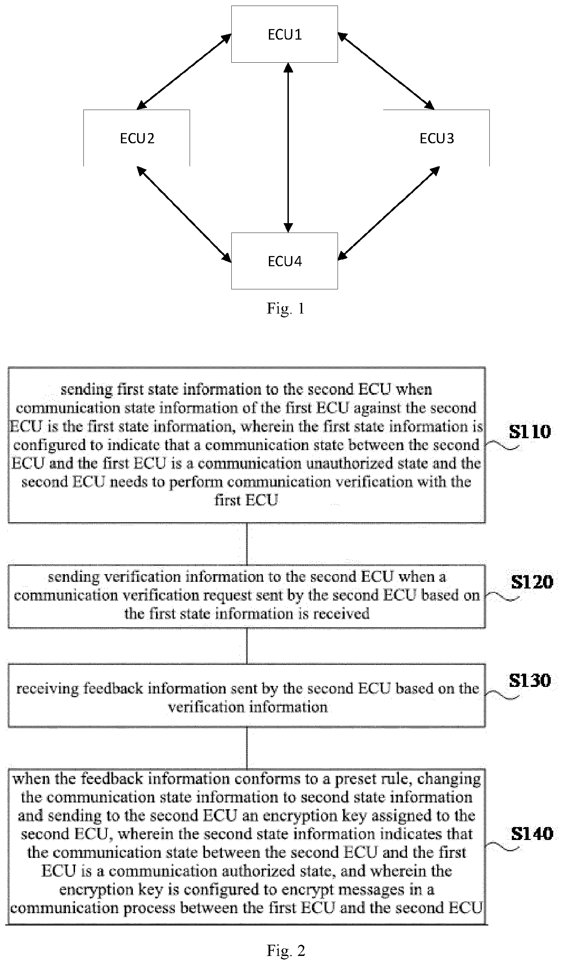

Please refer to Fig. 1, which is a diagram showing the hardware environment of a communication method provided by the present invention. Multiple ECUs may be included inside a vehicle, for example but not limited to, ECU1, ECU2, ECU3 and ECU4 shown in Fig. 1. When the communication state between ECU1 and ECU2, ECU3 as well as ECU4 is a communication authorized state, messages can be transmitted between ECU1 and ECU2, ECU3 and ECU4 via a CAN or CANFD bus respectively. When the communication state between ECU4 and ECU2 as well as ECU3 is communication authorized, the messages can be transmitted between ECU4 and ECU2 and ECU3 via the CAN or CANFD bus.

Please refer to Fig. 2 which is a flow chart of a communication method provided by the present invention applicable to an ECU of a vehicle, and the vehicle further includes a second ECU. The communication method provided by the present invention will be illustrated in detail below in combination with Fig. 2. The communication method may include steps S 110 to S 140.

Step S 110, sending first state information to the second ECU when communication state information of the first ECU against the second ECU is the first state information, wherein the first state information is configured to indicate that a communication state between the second ECU and the first ECU is a communication unauthorized state and the second ECU needs to perform communication verification with the first ECU.

An ECU is an electronic control unit, which can also be understood as a vehicle's computer or an in-vehicle computer. The ECU has computing and controlling functionality. When the vehicle is powered on, the ECU can collect signals from various sensors for computation, and transform the communication result into a control signal, to control the operation of a controlled object. With the development of vehicle electronic automation, multiple ECUs can be provided inside a vehicle. Information can be communicated between the multiple ECUs inside the vehicle by CAN or CANFD in order to simplify circuits and reduce costs.

Based on this, in order to improve security of information transmission between ECUs, communication verification may be performed in advance before the communication between the multiple ECUs. Messages can be transmitted when the communication verification is passed, so as to improve security of in-vehicle communication.

If the communication state between the first ECU and the second ECU is the first state, i.e., a communication unauthorized state, at this time, a communication path can be established between the first ECU and the second ECU by means of the communication verification for transmission of messages. Firstly, the first ECU may broadcast a message to broadcast to the second ECU the communication state information (first communication state) against the second ECU to the second ECU. Correspondingly, the second ECU may initiate the communication verification to the first ECU after receiving the message carrying the first communication state. The message for broadcasting the communication state information may be transmitted in plaintext or may be encrypted for transmission, which is not limited herein.

The first ECU may also simultaneously perform communication verification with multiple ECUs (e.g., the second ECU, the third ECU, and the fourth ECU, etc.) to establish communication paths for transmission of messages. When the communication state information of the first ECU against each of the above-mentioned multiple ECUs is the first state information, the first ECU will actively broadcast messages carrying the first state information to each of the above-mentioned multiple ECUs, to inform each of the above-mentioned multiple ECUs to initiate communication verification to the first ECU based on the messages. For communication verification, it is possible to preset in advance which ECUs can broadcast messages carrying communication state information and which ECUs can initiate a communication verification. For example, before the communication verification between the first ECU and the second ECU, the first ECU may be set as an ECU that can broadcast messages carrying communication state information and the second ECU may be set as an ECU that can initiate communication verification. It is also possible to set the second ECU as an ECU that can broadcast messages carrying communication state information and set the first ECU as an ECU that can initiate communication verification The present invention will not limit settings of ECUs for broadcast or communication verification.

Step S120, sending verification information to the second ECU when a communication verification request sent by the second ECU based on the first state information is received.

If the first ECU receives the communication verification request sent by the second ECU based on first state information, then the first ECU sends the verification information to the second ECU. Correspondingly, the second ECU receives the verification information. The verification information may be a message carrying a random number, or may be a message carrying a communication request authorization identifier.

Step S130, receiving feedback information sent by the second ECU based on the verification information.

Based on this, after the second ECU receives the verification information sent by the first ECU, the second ECU may send the feedback information based on the verification information to the first ECU. Correspondingly, the first ECU receives the feedback information based on verification information and sent by the second ECU.

When the verification information is a message carrying a random number, the feedback information can be an encrypted message obtained from the second ECU by encrypting the above-mentioned message using an encryption algorithm and a key. The encryption algorithm may be an asymmetric encryption algorithm or a symmetric encryption algorithm, which is not limited herein.

When the verification information is a message carrying a communication request authorization identifier, the feedback information may be a message carrying a communication authorization identifier and generated by the second ECU.

Step S140, changing the communication state information to second state information when the feedback information conforms to a preset rule, and sending to the second ECU an encryption key assigned to the second ECU, wherein the second state information is configured to indicate that the communication state between the second ECU and the first ECU is a communication authorized state, and wherein the encryption key is configured to encrypt the message in a communication process between the first ECU and the second ECU.

Based on this, after receiving the feedback information sent by the second ECU, the first ECU may determine whether the feedback information conforms to the preset rule. If the feedback information conforms to the preset rule, the first ECU changes the communication state information is to the second state information, i.e., a communication authorized state, and sends the encryption key to the second ECU. The encryption key can be a key randomly generated by the first ECU using a key generation mechanism, and a different encryption key can be generated each time. Alternatively, the first ECU randomly selects an encryption key from a large number of different encryption keys pre-stored in advance and assigns it to the second ECU, and the encryption key assigned each time is different from the previously assigned encryption key. Accordingly, when the second ECU receives a message containing the second state information and the encryption key, the second ECU can encrypt the message in the subsequent communication by the encryption key and an encryption algorithm, and send the encrypted message to the first ECU. After receiving the encrypted message, the first ECU can decrypt the encrypted message with the encryption key and a decryption algorithm corresponding to the encryption algorithm, and control the operation of an object corresponding to the message according to the decrypted message.

When the feedback information is an encrypted message obtained from the second ECU by encrypting the above-mentioned message through the encryption algorithm and a key, the first ECU can decrypt the data by the key and a decryption algorithm corresponding to the encryption algorithm to obtain target data. At this time, the preset rule may be to determine whether the target data matches with the verification information. If the target data matches with the verification information, the feedback information is determined to conform to the preset rule; and if the target data does not match with the verification information, the feedback information is determined not to conform to the preset rule.

When the feedback information is a message carrying a communication authorization identifier and generated by the second ECU, the preset rule may be to verify whether the communication authorization identifier is consistent with an authorization identifier pre-stored in the first ECU for the second ECU. If they are consistent, the feedback information is determined to conform to the preset rule; and if they are inconsistent, the feedback information is determined not to conform to the preset rule.

When the communication state information of the first ECU against the second ECU is first state information, the first state information is sent to the second ECU, wherein the first state information is configured to indicate that the communication state between the second ECU and the first ECU is a communication unauthorized state and the second ECU needs to perform communication verification with the first ECU. When a communication verification request sent by the second ECU based on the first state information is received, verification information is sent to the second ECU. Feedback information sent by the second ECU based on the verification information is received. When the feedback information conforms to a preset rule, the communication state information is changed to the second state information and an encryption key is sent to the second ECU. The second state information is configured to indicate that the communication state between the second ECU and the first ECU is a communication authorized state. The encryption key is configured to encrypt the message during communication between the first ECU and the second ECU. In this way, messages in the communication between ECUs can be encrypted through an encryption key to improve security, and communication verification is performed before the ECUs have negotiated a same encryption key, and the ECUs can communicate with each other with the same encryption key only after the communication verification, thereby improving communication security between the ECUs.

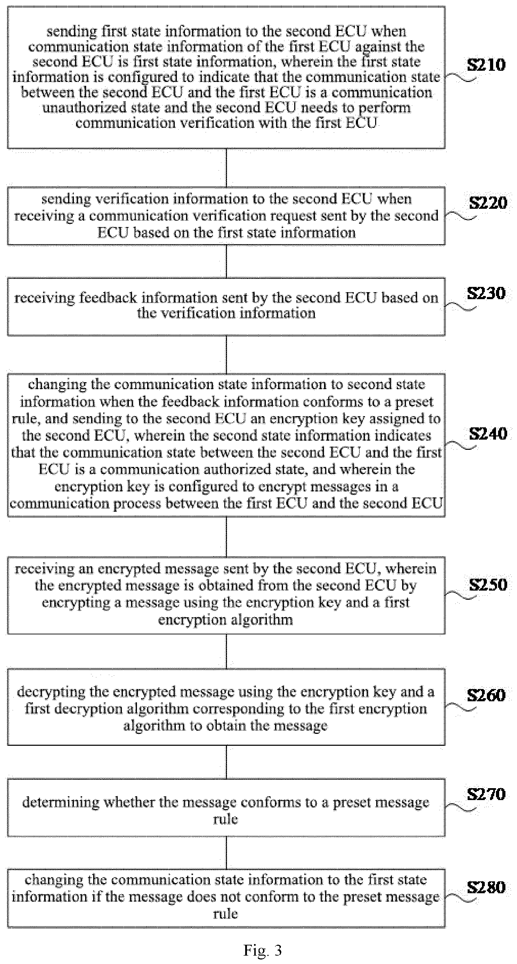

Please refer to Fig. 3 which is a flow chart of a communication method provided in another embodiment of the present invention applicable to a first ECU of a vehicle, and the vehicle further includes a second ECU. The communication method provided in the embodiment of the present invention will be illustrated in detail below in combination with Fig. 3. The communication method may include steps S210 to S280.

Step S210, sending first state information to the second ECU when communication state information of the first ECU against the second ECU is first state information, wherein the first state information is configured to indicate that the communication state between the second ECU and the first ECU is a communication unauthorized state and the second ECU needs to perform communication verification with the first ECU.

Step S220, sending verification information to the second ECU if receiving a communication verification request sent by the second ECU based on the first state information.

Step S230, receiving feedback information sent by the second ECU based on the verification information.

Step S240, changing the communication state information to second state information when the feedback information conforms to preset rules, and sending to the second ECU an encryption key assigned to the second ECU, wherein the second state information is configured to indicate that the communication state between the second ECU and the first ECU is a communication authorized state, and the encryption key is configured to encrypt a message in a communication process between the first ECU and the second ECU.

For step S210 to step S240, please refer to the contents of step S110 to step S140 described above, which will not be repeated herein.

Step S250, receiving an encrypted message sent by the second ECU, wherein the encrypted message is obtained from the second ECU by encrypting the message using the encryption key and a first encryption algorithm.

After the first ECU changes the communication state information to the second state information and sends the encryption key to the second ECU, the second ECU can use the received encryption key and the first encryption algorithm to encrypt the message to obtain the encrypted message, and then send the encrypted message to the first ECU. The first encryption algorithm may be a symmetric encryption algorithm or an asymmetric encryption algorithm, which is not limited herein.

Step S260, decrypting the encrypted message using the encryption key and a first decryption algorithm corresponding to the first encryption algorithm to obtain the message.

Step S270, determining whether the message conforms to the preset message rule.

Based on this, after receiving the encrypted message, the first ECU can decrypt the encrypted message with the same encryption key and the first decryption algorithm corresponding to the first encryption algorithm to obtain the unencrypted message, and determine whether the message conforms to the preset message rule. Only when the message is determined to conform to the preset message rule, the first ECU determines that the message is sent by the second ECU, and executes a control instruction for the vehicle contained in the message. If the first ECU determines that the message does not conform to the preset message rule, the first ECU determines the message as an illegitimate message. The illegitimate message may be a message obtained by a third party through maliciously intercepting and imitating a message of communication between the first ECU and the second ECU in a certain time period, and the third party sends the illegitimate message in an attempt to control the vehicle. Therefore, after receiving the encrypted message sent by the second ECU, a playback attack can be prevented by decrypting the encrypted message and determining whether the decrypted message conforms to the preset message rule.

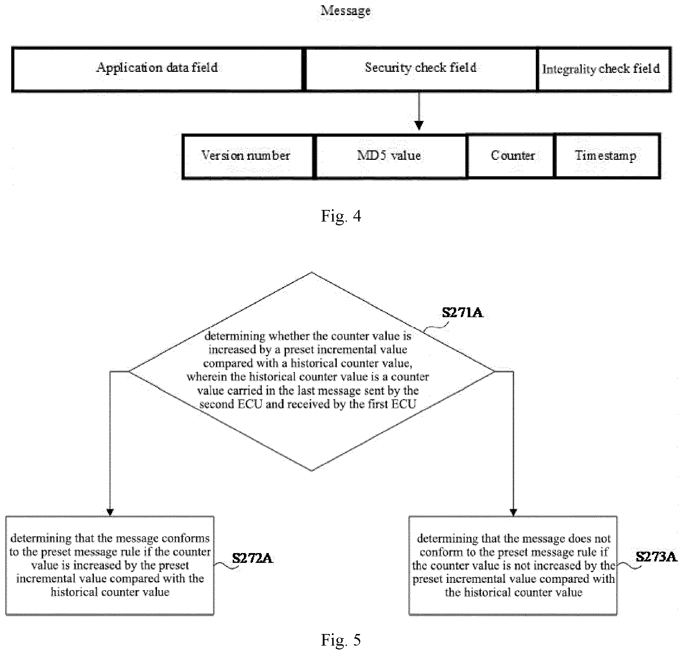

Optionally, after the encryption key is issued, subsequent messages need to pass a security check. That is, the ECU will execute a control instruction or instructions contained in the messages only when the messages conform to the preset message rule. As shown in Fig. 4, a message may include an application data field, a security check field and an integrality check field. The security check field further includes a version number, a message digest algorithm (MD5) value, a counter and a timestamp.

Whether a message conforms to the preset message rule may be determined by determining whether the version number is consistent with a preset version number. If the version number is consistent with the preset version number, it is determined that the currently received message conforms to the preset message rule; otherwise, if the version number is inconsistent with the preset version number, it is determined that the currently received message does not conform to the preset message rule.

It is possible to determine whether the MD5 value is consistent with a preset value. If they are inconsistent, it means that the message has been tampered with, and it is thus determined that the currently received message does not conform to the preset message rule.

In some other embodiments, as shown in Fig. 5, step S270 may include sub-steps S271A to S273A.

Sub-step S271A, determining whether the counter value is increased by a preset incremental value compared with a historical counter value, wherein the historical counter value is a counter value carried in the last message sent by the second ECU and received by the first ECU.

Each message sent by the second ECU to the first ECU contains a counter value, and the counter value is increased by the preset incremental value over time during sending of messages. The incremental value may be, but not limited to, for example 1, 3, or 5. After the communication state between the first ECU and the second ECU is a communication authorized state, even if no control message is to be transmitted between the first ECU and the second ECU, beacon messages will be transmitted at fixed intervals to maintain the communication link. Therefore, after the first ECU and the second ECU start to communicate, the counter values of messages sent by the second ECU to the first ECU keep increasing by the preset incremental value compared with a historical counter value. In other words, if a third party attempts to control the vehicle by monitoring messages communicated between the first ECU and the second ECU and imitating and sending illegitimate messages based on intercepted messages, the third party, when sending the illegitimate message, cannot determine what the counter values in the messages of the second ECU have been increased to. That is, the counter values in the illegitimate messages imitated by the third party cannot satisfy the condition that the counter value in the previous message sent by the second ECU should be increased by the preset incremental value next time. Therefore, it is possible to determine whether the message is a legitimate message by determining whether the counter value in the message is increased by the preset incremental value compared with the historical counter value.

Sub-step S272A, determining that the message conforms to the preset message rule if the counter value is increased by the preset incremental value compared with the historical counter value.

Sub-step S273A, determining that the message does not conform to the preset message rule if the counter value is not increased by the preset incremental value compared with the historical counter value.

Based on this, when the counter value is determined to be increased by the preset incremental value than the historical counter value, the message is determined to conform to the preset message rule. If the counter value is not increased by the preset incremental value than the historical counter value, it is determined that the message does not conform to the preset message rule.

For example, the second ECU sends messages to the first ECU at a fixed interval (e.g., 5ms), and the second ECU sends a total of three messages to the first ECU within a preset time period (e.g., 15ms). If the counter value in the first message is set to 1 in advance and the counter value in the second message is increased by a preset incremental value of 2, then the counter value in the second message is 3, and the counter value in the third message is 5. At this time, if the first ECU receives a message sent by the second ECU again, then the counter value carried in this message can be determined. If the counter value is 7, the message can be determined to be a legitimate message sent by the second ECU and is not an illegitimate message sent by a third party simulating a historical message. If the counter value is 5, the first ECU will determine that the message is an illegitimate message and will not execute the control instruction contained in the illegitimate message.

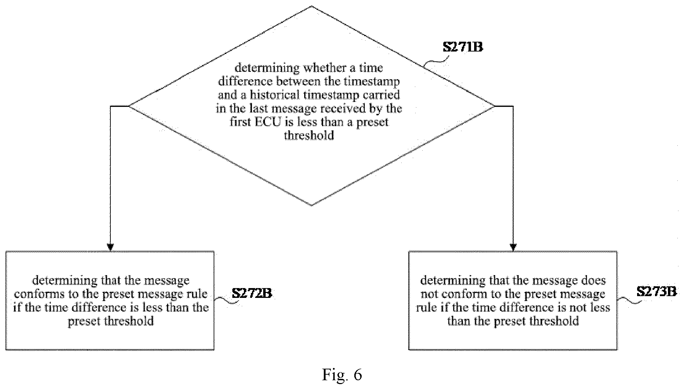

In some other embodiments, as shown in Fig. 6, step S270 may include sub-steps S271B to S273B.

Sub-step S271B, determining whether a time difference between the timestamp and a historical timestamp carried in the last message received by the first ECU is less than a preset threshold.

It is also possible to determine whether the message conforms to the preset message rule based on the timestamp in the message. The timestamp in the message may represent the time when the message is sent. Each message will contain a timestamp that may be in the format of 2021/4/12 15:30:03, which represents that the time when the message is sent is 15:30:3 on April 12, 2021. Each message sent by the second ECU to the first ECU contains a timestamp, and the timestamp in each message is increased sequentially. After the communication state between the first ECU and the second ECU becomes the communication authorized state, even if no control message is to be transmitted between the first ECU and the second ECU, beacon messages will be transmitted at fixed intervals to maintain the communication link. Therefore, the timestamp of each message sent by the second ECU is increased in sequence. If a third party attempts to control the vehicle by monitoring messages communicated between the first ECU and the second ECU and imitating and sending an illegitimate message based on intercepted messages, the third party cannot obtain the timestamp of the last message sent by the second ECU when sending the illegitimate message and thus cannot imitate successfully the correct format of messages between the first ECU and the second ECU.

Based on this, the timestamp in each message may be verified to determine whether the message is an illegitimate message that has been tampered with. That is, the timestamp in the last message received by the first ECU is acquired. The difference between the timestamp carried in the current message and the timestamp in the last message received is calculated. A determination is made as to whether the difference is less than the preset threshold to determine whether the message conforms to preset message rule.

Sub-step S272B, determining that the message conforms to the preset message rule if the time difference is less than the preset threshold.

Sub-step S273B, determining that the message does not conform to the preset message rule if the time difference is not less than the preset threshold.

The preset threshold may be a value set in advance, or may be the interval at which the above-mentioned beacon messages are sent. When the time difference is less than the preset threshold, it means that the message received at this time is a legitimate message sent continuously by the second ECU, and the message is determined to conform to the preset message rule. When the time difference is not less than the preset threshold, it means that the message may be an illegitimate message sent by a third party by illegitimately intercepting and imitating a historical message. Correspondingly, the first ECU will determine the message as an illegitimate message, and the message is determined not to conform to the preset message rule.

For example, a historical timestamp carried in the last message received by the first ECU is 2021/4/12 15:30:03, and the preset threshold is 2s. If the timestamp in the currently received message is 2021/4/12 15:30:08, the time difference between this timestamp and the historical timestamp carried in the last message received by the first ECU is 5s. At this point, the currently received message can be determined to be an illegitimate message, that is, the currently received message does not conform to the preset message rule. If the timestamp in the currently received message is 2021/4/12 15:30:04, the time difference between this timestamp and the historical timestamp carried in the last message received by the first ECU is 1s. The current message can then be determined to be a legitimate message and to conform to the preset message rule.

In addition, before determining whether the time difference between the timestamp and the historical timestamp carried in the last message received by the first ECU is less than the preset threshold, it can also determine whether the timestamp of the currently received message is increased incrementally compared with the historical timestamp carried in the last message received. If the timestamp of the currently received message is not increased incrementally, it can also be determined that the currently received message does not conform to the preset message rule.

The first ECU performs a security check on the security check field of the received message. If any of the version number, MD5 value, counter and timestamp in the message does not satisfy the above rules, it is determined that the message does not conform to the preset message rules. Alternatively, the first ECU performs a cyclic redundancy check (CRC) on the integrality check field. If the message is determined to be incomplete, it can also be determined that the message does not conform to the preset message rules. That is, when both the security check on the security check field passes and the CRC check on the integrality check field succeed, it can be determined that the message conforms to the preset message rules.

Step S280, changing the communication state information to the first state information if the message does not conform to the preset message rule.

When it is detected that the message does not conform to a preset message rule, it means that the currently received message may be an illegitimate message sent by a third party. The first ECU then will change the second state information against the second ECU to the first state information, i.e., change the communication state between the first ECU and the second ECU to the communication unauthorized state again, and will not executed control instructions contained in the message.

After the message is determined to not conform to a preset message rule and the communication state information is changed to the first state information, step S 110 to step S 140 are performed again. That is, the first ECU determines that the current communication with the second ECU may be illegitimately monitored by a third party, and therefore changes the communication state against the second ECU to the communication unauthorized state to ensure communication security. Further, after receiving information that the first ECU changes the current communication state information, the second ECU can request communication verification again.

If the communication verification passes, the first ECU assigns a new encryption key to the second ECU, and changes the communication state to the second state information, such that a communication path with the second ECU is re-established and subsequent control message is transmitted.

When communication state information of the first ECU against the second ECU is first state information, the first state information is sent to the second ECU. If a communication verification request sent by the second ECU based on the first state information is received, verification information is sent to the second ECU. Feedback information sent by the second ECU based on verification information is received. When the feedback information conforms to a preset rule, the communication state information is changed to second state information and an encryption key is sent to the second ECU. An encrypted message sent by the second ECU is received, wherein the encrypted message is obtained from the second ECU by encrypting a message using the encryption key and a first encryption algorithm. The encrypted message is decrypted using the encryption key and a first decryption algorithm corresponding to the first encryption algorithm to obtain the message. A determination is made as to whether the message conforms to a preset message rule. If the message does not conform to the preset message rule, the communication state information is changed to the first state information. In this way, messages in the communication between ECUs can be encrypted by an encryption key to improve security. Further, communication verification is performed before the ECUs have negotiated a same encryption key, and the ECUs can communicate with each other with the same encryption key only after the communication verification, thereby improving communication security between the ECUs. Moreover, it also ensures that each time the vehicle is powered on or an ECU detects an abnormality, the first ECU will assign a new encryption key to the second ECU to encrypt messages during the transmission, thereby reducing the possibility of the encryption key being maliciously stolen and the encryption algorithm being cracked, and improving security of message transmission. Furthermore, through security check on the security field of the messages, replay attacks can be effectively prevented and security of in-vehicle communication can be improved.

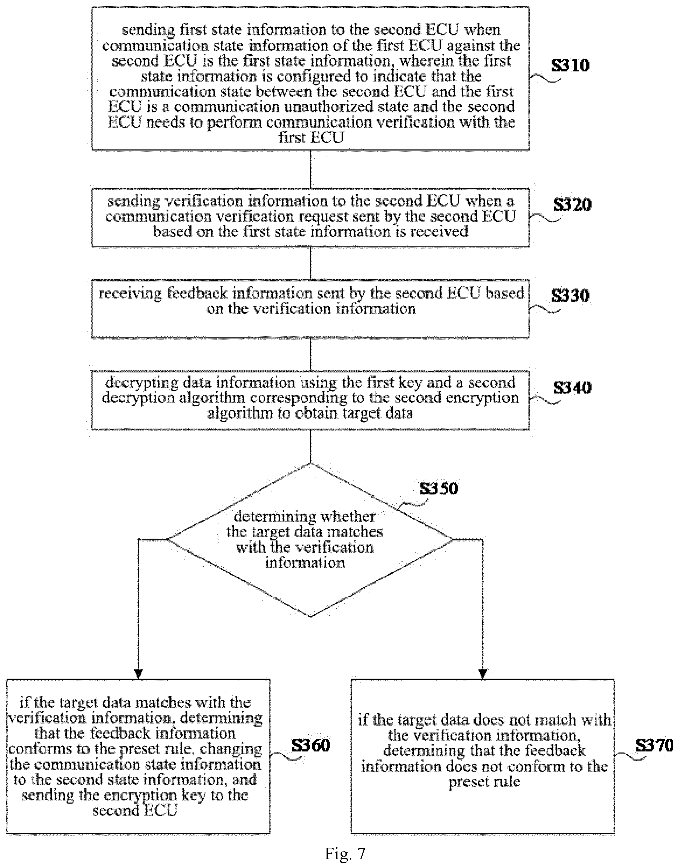

Please refer to Fig. 7 which is a flow chart of a communication method provided in another embodiment of the present invention applicable to a first ECU of a vehicle, and the vehicle further includes a second ECU. The communication method provided in the embodiment of the present invention will be illustrated in detail below in combination with Fig. 7. The communication method may include steps S310 to S370.

Step S310, sending first state information to the second ECU when communication state information of the first ECU against the second ECU is the first state information, wherein the first state information is configured to indicate that the communication state between the second ECU and the first ECU is a communication unauthorized state and the second ECU needs to perform communication verification with the first ECU.

Step S320, sending verification information to the second ECU when a communication verification request sent by the second ECU based on the first state information is received.

Step S330, receiving feedback information sent by the second ECU based on the verification information.

For step S310 to step S330, please refer to the contents of step S110 to step S130 described above, which will not be repeated herein.

Step S340, decrypting data using the first key and a second decryption algorithm corresponding to the second encryption algorithm to obtain target data.

The data is obtained from the second ECU by encrypting the verification information using the first key and the second encryption algorithm. Therefore, after receiving the feedback information sent by the second ECU based on the verification information, the first ECU can decrypt the data using the same first key and the second decryption algorithm corresponding to the second encryption algorithm to obtain the target data. Since the first ECU decrypts the data using a key same as the key used by the second ECU for encrypting the verification information, the target data obtained by decrypting the data should match with the initial verification information. If the target data does not match with the initial verification information, it may mean that the feedback information is an illegitimate message sent by a third party by imitating a historical message. Therefore, it is possible to determine whether the feedback information conforms to the preset rule by determining whether the target data obtained through the decryption matches with the verification information.

Step S350, determining whether the target data matches with the verification information.

Step S360, if the target data matches with the verification information, determining that the feedback information conforms to the preset rule, changing the communication state information to the second state information, and sending the encryption key to the second ECU.

After obtaining the target data, whether the feedback information conforms to the preset rule is determined by determining whether the target data matches with the verification information. If the target data matches with the verification information, the feedback information is determined to conform to the preset rule, the communication state information is changed to the second state information, and the encryption key is sent to the second ECU. Correspondingly, the second ECU may encrypt the subsequent messages using the encryption key and the first encryption algorithm after receiving messages containing the changed communication state information and the encryption key.

For example, if the verification information sent by the first ECU is a random number 123456, the second ECU encrypts the random number using a first key and a second encryption algorithm after receiving the random number to obtain feedback information 543210, and sends the feedback information to the first ECU. The first ECU can decrypt the feedback information using the first key and the second decryption algorithm corresponding to the second encryption algorithm to obtain target data. If the decrypted target data is 123456, it means that the target data matches with the verification information, and the feedback information is thus determined to conform to the preset rule, and the communication state information is changed to the second state information, and the encryption key is sent to the second ECU.

Step S370, if the target data does not match with the verification information, determining that the feedback information does not conform to the preset rule.

Again, in the example that the verification information sent by the first ECU being a random number 123456, if the decrypted target data is 423016, it means that the target data does not match with the verification information. The feedback information is thus determined to not conform to the preset rule, which is equivalent to a failure in the communication verification between the second ECU and the first ECU. That is, the first ECU determines that the second ECU is not a legitimate node, and therefore will not assign an encryption key to the second ECU.

Based on this, if the second ECU still needs to communicate with the first ECU, the second ECU may initiate communication verification again to the first ECU, that is, step S310 to step S350 may be performed again.

When the communication state information of the first ECU against the second ECU is first state information, the first state information is sent to the second ECU. If a communication verification request sent by the second ECU based on the first state information is received, verification information is sent to the second ECU. Feedback information sent by the second ECU based on the verification information is received. Data is decrypted using a first key and a second decryption algorithm corresponding to the second encryption algorithm to obtain target data. A determination is made as to whether the target data matches with the verification information. If the target data matches with the verification information, it is determined that the feedback information conforms to the preset rule, the communication state information is changed to the second state information, and the encryption key is sent to the second ECU. If the target data does not match with the verification information, it is determined that the feedback information does not conform to the preset rule. In this way, the messages in the communication process can be encrypted by an encryption key between the ECUs to improve security, and communication verification is performed before the ECUs have negotiated a same encryption key, and the ECUs can communicate with each other with the same encryption key only after the communication verification, thereby improving communication security between the ECUs.

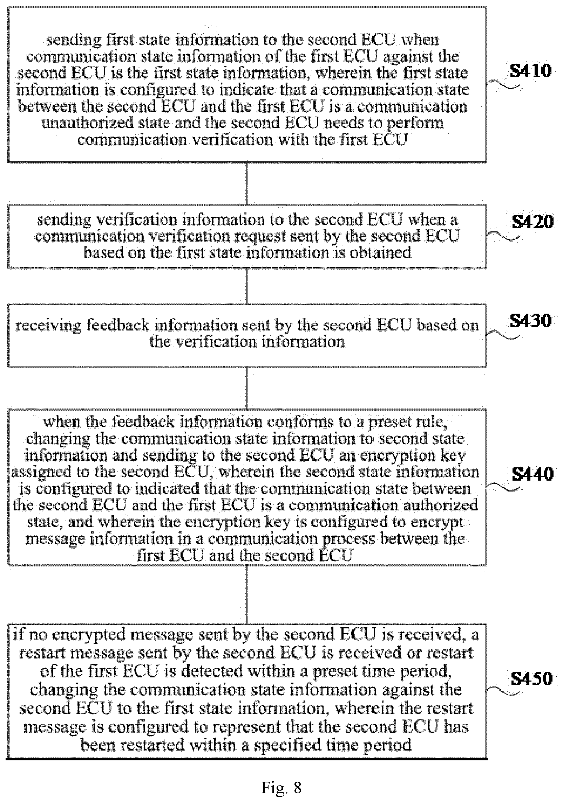

Please refer to Fig. 8, which is a flow chart of a communication method provided in still another embodiment of the present invention applicable to a first ECU of a vehicle, and the vehicle further includes a second ECU. The communication method provided in the embodiment of the present invention will be illustrated in detail below in combination with Fig. 8. The communication method may include steps S410 to S450.

Step S410, sending first state information to the second ECU when communication state information of the first ECU against the second ECU is the first state information, wherein the first state information is configured to indicate that a communication state between the second ECU and the first ECU is a communication unauthorized state and the second ECU needs to perform communication verification with the first ECU.

Step S420, sending verification information to the second ECU when a communication verification request sent by the second ECU based on the first state information is obtained.

Step S430, receiving feedback information sent by the second ECU based on the verification information.

Step S440, when the feedback information conforms to a preset rule, changing the communication state information to second state information and sending to the second ECU an encryption key assigned to the second ECU, wherein the second state information is configured to indicated that the communication state between the second ECU and the first ECU is a communication authorized state, and wherein the encryption key is configured to encrypt messages in a communication process between the first ECU and the second ECU.

For step S410 to step S440, please refer to the contents of step S110 to step S140 described above, which will not be repeated herein.

Step S450, if no encrypted message sent by the second ECU is received, a restart message sent by the second ECU is received or restart of the first ECU is detected within a preset time period, changing the communication state information against the second ECU to the first state information, wherein the restart message is configured to represent that the second ECU has been restarted within a specified time period.

After the communication between the first ECU and the second ECU is established safely and successfully, the first ECU may continuously monitor messages sent by the second ECU and whether the second ECU is restarted.

When the first ECU detects that the format of a message from the second ECU is incorrect, the message is determined to be an illegitimate message. To ensure security of in-vehicle communication, the first ECU will change the communication state information to the first state information.

When no encrypted message sent by the second ECU is received within a preset time period, the first ECU may determine that the second ECU may have a hardware failure or the communication between the second ECU and the first ECU may be interrupted due to other reasons. At this time, the first ECU will also change the communication state information to the first state information. Even if the second ECU resumes secure communication with the first ECU, communication verification still needs to be re-initiated to ensure secure in-vehicle communication.

When receiving a restarted message sent by the second ECU, the first ECU may also change the communication state information to the first state information. That is, once the second ECU is restarted, if secure communication with the first ECU is needed again, communication verification needs to be initiated again. Subsequent control messages will be encrypted with a new encryption key after the communication verification has passed.

If the first ECU detects that it has been restarted, the communication state against the second ECU automatically recovers to an initial state (i.e., the first state information). At this time, if the second ECU needs to perform security communication with the first ECU again, communication verification still needs to be initiated again and the subsequent control messages will be encrypted with a new encryption key after the communication verification has passed.

In summary, as long as the first ECU changes the state information against the second ECU to the first state information, the second ECU re-initiates communication verification to obtain an encryption key from the first ECU, which will be used to encrypt the subsequent messages.

When communication state information of the first ECU against the second ECU is first state information, the first state information is sent to the second ECU. Verification information is sent to the second ECU when a communication verification request sent by the second ECU based on first state information is received. Feedback information sent by the second ECU based on verification information is received. When the feedback information conforms to a preset rule, the communication state information is changed to second state information, and an encryption key is sent to the second ECU. The communication state information against the second ECU is changed to the first state information if an encrypted message sent by the second ECU is not received, a restart message sent by the second ECU is received or restart of the first ECU is detected within a preset time period, wherein the restart message is configured to represent that the second ECU has been restarted within a specified time period. In this way, it can ensure that every time the vehicle is powered on or the ECU detects an abnormality, the first ECU will assign a new encryption key to the second ECU to encrypt messages during the transmission, thereby reducing the possibility of the encryption key being maliciously stolen and the encryption algorithm being cracked, and improving security of message transmission.

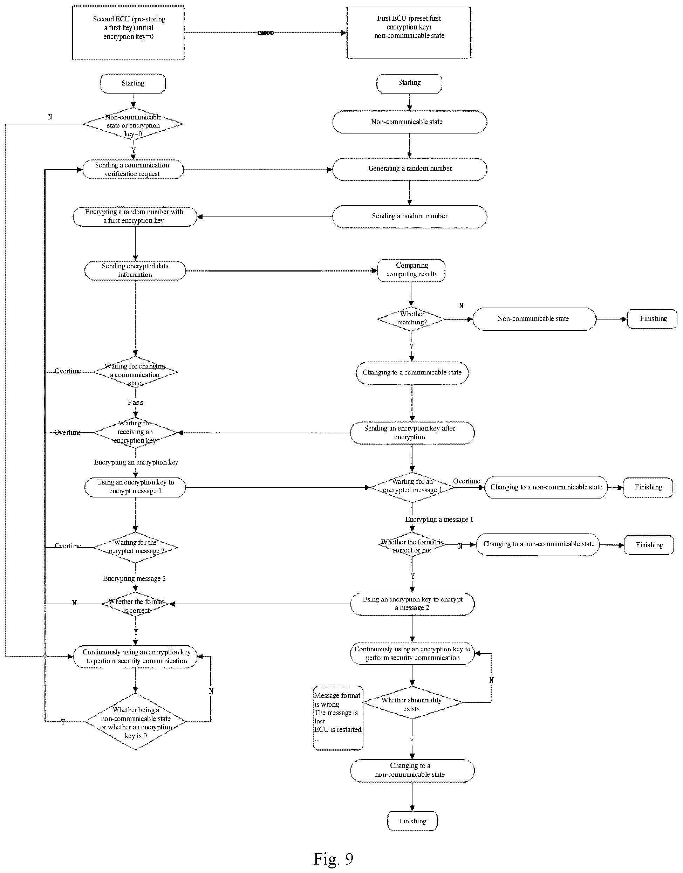

Please refer to Fig. 9, which shows a flow chart of interaction between a first ECU and a second ECU in the present solution.

The first ECU and the second ECU may communicate via CANFD. When an initial communication state between the first ECU and the second ECU is a communication unauthorized state, the first ECU sends the communication state to the second ECU by broadcasting. The second ECU sends a communication verification request to the first ECU when acquiring that the communication state information is the communication unauthorized state. The first ECU, after receiving the communication verification request, generates a verification information containing a random number, and sends the verification information to the second ECU. The second ECU, after receiving the verification information, encrypts the random number in the verification information using a first key to obtain encrypted data, and sends the data to the first ECU. Correspondingly, the first ECU decrypts the received encrypted data using the first key, and compares the decrypted target data with the verification information. If the decrypted target data does not match with the verification information, the first ECU maintains the current communication state as the communication unauthorized. If the decrypted target data matches with the verification information, the first ECU changes the current communication state to a communication authorized state, and encrypts an encryption key with the first key, and then sends the encrypted encryption key to the second ECU. If the time waiting for a message containing the communication state information and the encryption key sent by the first ECU exceeds a preset time period, the second ECU will re-initiate a communication request. If the encrypted encryption key is received within the preset time period, the second ECU decrypts the encryption key using the first key to obtain a decrypted encryption key.

Based on this, the second ECU encrypts a message 1 using the encryption key and sends the encrypted message 1 to the first ECU. If the first ECU does not receive the encrypted message 1 within a specified time period, the first ECU will change the current communication state to the communication unauthorized state. If the encrypted message 1 is received, the first ECU uses the encryption key to decrypt the message 1 and determines whether the message conforms to a preset message rule or rules. If the message does not conform to the preset message rules, the first ECU changes the current communication state to the communication unauthorized state. If the message conforms to the preset message rules, the first ECU encrypts messages 2 continuously using the encryption key and send it to the second ECU. If the message 2 is not received by the second ECU within a preset time period, the second ECU re-initiates a communication verification request. If the message 2 is received within the preset time period, the second ECU decrypts the message 2 using the encryption key and determines whether the message 2 conforms to a preset message rule or rules. If the message 2 does not conform to the preset message rules, the second ECU re-initiates a communication verification. If the message 2 conforms to the preset message rules, the second ECU encrypts subsequent messages continuously using the encryption key.

After the first ECU and the second ECU successfully establish secure communication, the second ECU may continuously monitor the communication state of the first ECU and its own stored encryption key, and re-initiate a communication verification to the first ECU if detecting that the communication state of the first ECU is changed to a communication unauthorized state or the encryption key is restored to an initial value of 0. Similarly, the first ECU can also continuously detect messages sent by the second ECU, and change the current communication state information to a communication unauthorized state if it determines that a received message does not conform to the preset message rules, if a message sent by the second ECU is not received within a preset time period, if a restart message sent by the second ECU is received, or if a restart of the first ECU is detected.

In this way, messages in the communication between ECUs can be encrypted by an encryption key to improve security. Further, communication verification is performed before the ECUs have negotiated a same encryption key between ECUs, and the ECUs can communicate with each other with the same encryption key only after the communication verification, thereby improving communication security between the ECUs. It also ensures that each time the vehicle is powered on or an ECU detects an abnormality, the first ECU will assign a new encryption key to the second ECU to encrypt messages during the transmission, thereby reducing the possibility of the encryption key being maliciously stolen and the encryption algorithm being cracked, and improving security of message transmission. Furthermore, through security check on the security field of the messages, replay attacks can be effectively prevented and security of in-vehicle communication can be improved.

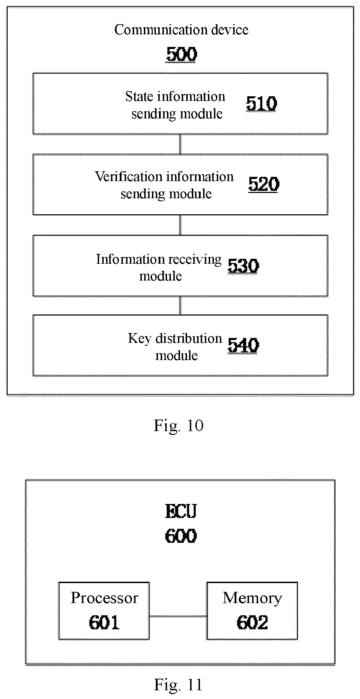

Please refer to Fig. 10 which shows a structural block diagram of a communication device 500 provided in embodiments of the present invention applicable to a first ECU of a vehicle, and the vehicle further includes a second ECU. The device 500 may include: a state information sending module 510, a verification information sending module 520, an information receiving module 530 and a key distribution module 540.

The state information sending module 510 is configured to send first state information to the second ECU when communication state information of the first ECU against the second ECU is the first state information, wherein the first state information is configured to indicate that a communication state between the second ECU and the first ECU is a communication unauthorized state and the second ECU needs to perform communication verification with the first ECU.

The verification information sending module 520 is configured to send verification information to the second ECU when a communication verification request sent by the second ECU based on the first state information is received.

The information receiving module 530 is configured to receive feedback information sent by the second ECU based on the verification information.

The key distribution module 540 is configured to, when the feedback information conforms to a preset rule, change the communication state information to second state information and send to the second ECU an encryption key assigned to the second ECU, wherein the second state information is configured to indicate that the communication state between the second ECU and the first ECU is a communication authorized state, and wherein the encryption key is configured to encrypt messages in a communication process between the first ECU and the second ECU.

After changing the communication state information to the second state information when the feedback information conforms to the preset rule and sending the encryption key to the second ECU, the communication device 500 may include: a ciphertext receiving module, a decryption module and a message determining module. The ciphertext receiving module may be configured to receive an encrypted message sent by the second ECU, wherein the encrypted message is obtained from the second ECU by encrypting a message using the encryption key and a first encryption algorithm. The decryption module may be configured to decrypt the encrypted message using the encryption key and a first decryption algorithm corresponding to the first encryption algorithm to obtain the messages. The message determination module may be configured to determine whether the messages conform to a preset message rule; and if the messages do not conform to the preset message rule, change the communication state information to the first state information to perform the step of sending first state information to the second ECU when communication state information of the first ECU against the second ECU is the first state information to the step of changing the communication state information to second state information when the feedback information conforms to the preset rule and sending the encryption key to the second ECU.

The message determination module may include a counter value determination unit. The counter value determination unit may be specifically configured to determine whether the counter value is increased by a preset incremental value compared with a historical counter value, wherein the historical counter value is a counter value carried in the last message sent by the second ECU and received by the first ECU; if the counter value is increased by the preset incremental value compared with the historical counter value, determine that the message conforms to the preset message rule; and if the counter value is not increased by the preset incremental value compared with the historical counter value, determine that the message does not conform to preset message rule.

The message determination module may further include a timestamp determination unit. The timestamp determination unit may be specifically configured to determine whether a time difference between the timestamp and a historical timestamp carried in the last message received by the first ECU is less than a preset threshold; determine that the message conforms to the preset message rule if the time difference is less than the preset threshold; and determine that the message does not conform to the preset message rule if the time difference is not less than the preset threshold.

The feedback information is data obtained by the second ECU by encrypting the verification information using a first key and a second encryption algorithm. After receiving the feedback information sent by the second ECU based on the verification information, the communication device 500 may further include a target data acquisition unit and a target data determination unit. The target data acquisition unit may be configured to decrypt the data using the first key and a second decryption algorithm corresponding to the second encryption algorithm to obtain target data. The target data determination unit can be configured to determine whether the target data matches with the verification information; if the target data matches with the verification information, determine that the feedback information conforms to the preset rule; and if the target data does not match with the verification information, determine that the feedback information does not conform to the preset rule.

The communication device 500 may further include a state changing module. The state changing module is configured to change the communication state information against the second ECU to the first state information if no encrypted message sent by the second ECU is received, a restart message sent by the second ECU is received or restart of the first ECU is detected within a preset time period, wherein the restart message is configured to represent that the second ECU has been restarted within a specified time period.

It will be clear to those skilled in the art that, for the convenience and brevity of the description, for specific working processes of the above described devices and modules, please refer to the corresponding processes in the above-described method embodiments, which will not be repeated herein.

The modules may be coupled to each other electrically, mechanically, or in other forms.

In addition, each function module in each embodiment of the present invention may be integrated in a processing module, or each module may physically exist separately, or two or more modules may be integrated in a module. The above integrated modules may be implemented either in the form of hardware or in the form of software function modules.

In conclusion, in the solution provided in the embodiments of the present invention, when the communication state information of the first ECU against the second ECU is the first state information, the first state information is sent to the second ECU. If a communication verification request sent by the second ECU based on the first state information is received, the verification information is sent to the second ECU. Feedback information sent by the second ECU based on the verification information is received. When the feedback information conforms to a preset rule, the communication state information is changed to second state information and the encryption key is sent to the second ECU. The encrypted message sent by the second ECU is received, wherein the encrypted message is obtained from the second ECU by encrypting a message using the encryption key and the first encryption algorithm. The encrypted message is decrypted using the encryption key and a first decryption algorithm corresponding to the first encryption algorithm to obtain the message. A determination is made as to whether the message conforms to a preset message rule. If the message does not conform to the preset message rule, the communication state information is changed to the first state information. In this way, the message during communication between the ECUs can be encrypted by an encryption key to improve security. Further, communication verification is performed before the ECUs have negotiated a same encryption key, and the ECUs can communicate with each other with the same encryption key only after the communication verification, thereby improving communication security between ECUs. It also ensures that each time the vehicle is powered on or an ECU detects an abnormality, the first ECU will assign a new encryption key to the second ECU to encrypt messages during the transmission, thereby reducing the possibility of the encryption key being maliciously stolen and the encryption algorithm being cracked, and improving security of message transmission. Furthermore, through security check on the security field of messages, replay attacks can be effectively prevented and security of in-vehicle communication can be improved.

An ECU provided in the present invention will be described below in combination with Fig. 11.

Please refer to Fig. 11, which shows a structural block diagram of an ECU 600 provided in an embodiment of the present invention, and a communication method provided in the embodiments of the present invention may be performed by the ECU 600.

The ECU 600 may include one or more of the following components: a processor 601, memory 602, and one or more applications, wherein the one or more applications may be stored in the memory 602 and configured to be executed by the one or more processors 601, and the one or more programs are configured to perform the methods described above.

The processors 601 may include one or more processing cores. The processors 601 utilize various interfaces and lines to connect various parts within the entire ECU 600, to perform various functions and process data of the ECU 600 by running or executing instructions, programs, code sets or instruction sets stored in the memory 602, and by calling data stored in the memory 602. Optionally, the processors 601 may be realized by employing at least one hardware form including digital signal processing (DSP), field-programmable gate array (FPGA), and programmable logic array (PLA). The processor 601 can integrate one or a combination of more of a central processing unit (CPU), a graphics processing unit (GPU), and a modem. The CPU mainly handles with an operating system, user interfaces, and applications, etc. The GPU is configured to be responsible for rendering and drawing of displayed content; and the modem is configured to handle with wireless communication. It can be understood that the above modem can also be integrated into the processors 601 and implemented through a separate communication chip.

The memory 602 may include a random access memory (RAM) or may also include a read-only memory (ROM). The memory 602 may be used to store instructions, programs, codes, code sets, or instruction sets. The memory 602 may include a stored program area and a stored data area, wherein the stored program area may store instructions for implementing an operating system, instructions for implementing at least one function (such as a touch function, a sound playback function, an image playback function, etc.), instructions for implementing each of the method embodiments described below, and the like. The storage data area may also store data created by the ECU 600 in use (such as various corresponding relationships described above), etc.

It will be clear to those skilled in the art that, for the convenience and brevity of the description, for the specific working processes of the above described devices and modules, please refer to the corresponding processes in the above-described method embodiments, which will not be repeated redundantly herein.

In embodiments provided in the present invention, the coupling or direct coupling or communication connection between the modules shown or discussed may be indirect coupling or communication connection through some interfaces, devices or modules, and may be in electrical, mechanical or other forms.

In addition, each function module in the present invention may be integrated in a processing module, or each module may physically exist separately, or two or more modules may be integrated in one module. The above integrated modules may be implemented either in the form of hardware or in the form of software function modules.

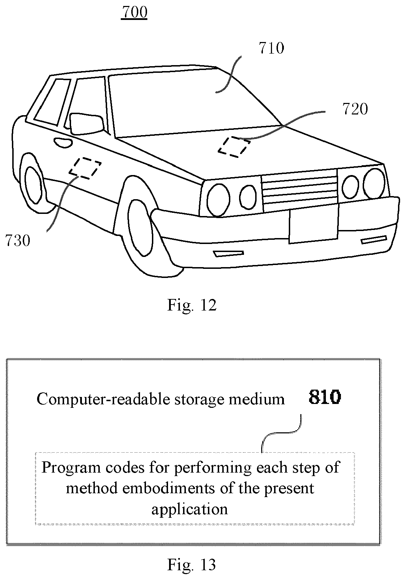

Please refer to Fig. 12, the present invention further provides a vehicle 700, the vehicle 700 includes a vehicle body 710, a first ECU 720 and a second ECU 730. The first ECU 720 and the second ECU 730 are arranged inside the vehicle body 710 and can control the vehicle 700.

Please refer to Fig. 13 which shows a structural block diagram of a computer-readable storage medium provided by the present invention. The computer-readable medium 800 stores program codes that may be called by a processor to perform the method described above.

The computer-readable storage medium 800 may be an electronic memory such as a flash memory, an EEPROM (electrically erasable programmable read-only memory), an EPROM, a hard disk, or an ROM. Optionally, the computer-readable storage medium 800 includes a non-transitory computer-readable storage medium. The computer-readable storage medium 800 has a storage space for program codes 810 that perform any method step of the method described above. These program codes may be read from or written to one or more computer program products. The program codes 810 may be compressed, for example, in an appropriate form.

Finally, it should be noted that the embodiments are merely used to illustrate technical solutions of the present invention, rather than limiting the present invention; although the present invention is described in detail with reference to the embodiments, it should be understood by those skilled in the art that the technical solutions in the embodiments may be modified, or some of the technical features may be equivalently substituted.

## Claims

1. A communication method, applicable to a first electronic control unit, ECU, of a vehicle, the vehicle further comprising a second ECU, the method **characterized by**:
sending first state information to the second ECU when communication state information of the first ECU against the second ECU is the first state information (S110, S210, S310, S410), wherein the first state information indicates that a communication state between the second ECU and the first ECU is a communication unauthorized state and that the second ECU needs to perform communication verification with the first ECU;
sending verification information to the second ECU when a communication verification request sent by the second ECU based on the first state information is received (S 120, S220, S320, S420);
receiving feedback information sent by the second ECU based on the verification information (S130, S230, S330, S430); and
when the feedback information conforms to a preset rule, changing the communication state information to second state information and sending to the second ECU an encryption key assigned to the second ECU (S140, S240, S440), wherein the second state information indicates that the communication state between the second ECU and the first ECU is a communication authorized state, and wherein each time
the encryption key is different from an encryption key assigned to the second ECU in a previous communication verification process and is configured to encrypt messages in a subsequent communication process between the first ECU and the second ECU.

2. The method of claim 1, further comprising, after the step of changing the communication state information to the second state information when the feedback information conforms to the preset rule and sending the encryption key to the second ECU (S240):
receiving an encrypted message sent by the second ECU (S250), wherein the encrypted message is obtained from the second ECU by encrypting a message using the encryption key and a first encryption algorithm;
decrypting the encrypted message using the encryption key and a first decryption algorithm corresponding to the first encryption algorithm to obtain the message (S260);
determining whether the message conforms to a preset message rule (S270); and
changing the communication state information to the first state information if the message does not conform to the preset message rule (S280).

3. The method of claim 2, further comprising, after the step of changing the communication state information to the first state information if the message does not conform to the preset message rule (S280):
performing the step of sending first state information to the second ECU when communication state information of the first ECU against the second ECU is the first state information (S210) to the step of, when the feedback information conforms to a preset rule, changing the communication state information to second state information and sending to the second ECU an encryption key (S240).

4. The method of claim 2, wherein the message comprises a counter value, and said determining whether the message conforms to a preset message rule (S270) comprises:
determining whether the counter value is increased by a preset incremental value compared with a historical counter value (S271A), wherein the historical counter value is a counter value carried in the last message sent by the second ECU and received by the first ECU;
determining that the message conforms to the preset message rule if the counter value is increased by the preset incremental value compared with the historical counter value (S272A); and
determining that the message does not conform to the preset message rule if the counter value is not increased by the preset incremental value compared with the historical counter value (S273A).

5. The method of claim 2, wherein the message comprises a timestamp, and said determining whether the message conforms to a preset message rule (S270) further comprises:
determining whether a time difference between the timestamp and a historical timestamp carried in the last message received by the first ECU is less than a preset threshold (S271B);
determining that the message conforms to the preset message rule if the time difference is less than the preset threshold (S272B); and
determining that the message does not conform to the preset message rule if the time difference is not less than the preset threshold (S273B).

6. The method of claim 1, wherein the feedback information is data obtained by the second ECU by encrypting the verification information using a first key and a second encryption algorithm, and wherein the method further comprises, after receiving the feedback information sent by the second ECU based on the verification information (S3 30):
decrypting the data using the first key and a second decryption algorithm corresponding to the second encryption algorithm to obtain target data (S340);
determining whether the target data matches with the verification information (S350);
determining that the feedback information conforms to the preset rule if the target data matches with the verification information (S360); and
determining that the feedback information does not conform to the preset rule if the target data does not match with the verification information (S370).

7. The method of any of claims 1-6, further comprising:
if no encrypted message sent by the second ECU is received, a restart message sent by the second ECU is received or restart of the first ECU is detected within a preset time period, changing the communication state information against the second ECU to the first state information (S450), wherein the restart message is configured to represent that the second ECU has been restarted within a specified time period.

8. A communication device (500), applicable to a first ECU of a vehicle, the vehicle further comprising a second ECU, indicated by:
a state information sending module (510), configured to send first state information to the second ECU when communication state information of the first ECU against the second ECU is the first state information (S110, S210, S310, S410), wherein the first state information is configured to indicate that a communication state between the second ECU and the first ECU is a communication unauthorized state and the second ECU needs to perform communication verification with the first ECU;
a verification information sending module (520), configured to send verification information to the second ECU when a communication verification request sent by the second ECU based on the first state information is received (S 120, S220, S320, S420);
an information receiving module (530), configured to receive feedback information sent by the second ECU based on the verification information (S130, S230, S330, S430); and
a key distribution module (540), configured to, when the feedback information conforms to a preset rule, change the communication state information to second state information and send to the second ECU an encryption key assigned to the second ECU (S140, S240, S440), wherein the second state information is configured to indicate that the communication state between the second ECU and the first ECU is a communication authorized state, and wherein each time the encryption key is different from an encryption key assigned to the second ECU in a previous communication verification process and is configured to encrypt messages in a subsequent communication process between the first ECU and the second ECU.

9. The communication device (500) of claim 8, further comprising:
a ciphertext receiving module, configured to, after the communication state information is changed to the second state information when the feedback information conforms to the preset rule and after the encryption key is sent to the second ECU, receive an encrypted message sent by the second ECU (S250), wherein the encrypted message is obtained from the second ECU by encrypting a message using the encryption key and a first encryption algorithm;
a decryption module, configured to decrypt the encrypted message using the encryption key and a first decryption algorithm corresponding to the first encryption algorithm to obtain the message (S260);
a message determination module, configured to determine whether the message conforms to a preset message rule (S270); and
a communication state information changing module, configured to change the communication state information to the first state information if the message does not conform to the preset message rule (S280).

10. The communication device (500) of claim 9, wherein the message comprises a counter value, and the message determination module is further configured to:
determine whether the counter value is increased by a preset incremental value compared with a historical counter value (S271A), wherein the historical counter value is a counter value carried in the last message sent by the second ECU and received by the first ECU;
determine that the message conforms to the preset message rule if the counter value is increased by the preset incremental value compared with the historical counter value (S272A); and
determine that the message does not conform to the preset message rule if the counter value is not increased by the preset incremental value compared with the historical counter value (S273A).

11. The communication device (500) of claim 9, wherein the message comprises a timestamp, and the message determination module is further configured to:
determine whether a time difference between the timestamp and a historical timestamp carried in the last message received by the first ECU is less than a preset threshold (S271B);
determine that the message conforms to the preset message rule if the time difference is less than the preset threshold (S272B); and
determine that the message does not conform to the preset message rule if the time difference is not less than the preset threshold (S273B).

12. An ECU (600), comprising:
one or more processors (601);
memory (602); and
one or more programs, wherein the one or more programs are stored in the memory (602) and configured to be executed by the one or more processors (601), and the one or more programs are configured to perform the method of any one of claims 1-7.

13. A vehicle comprising a vehicle body and an ECU (600) of claim 12 provided in the vehicle body.

14. A computer-readable storage medium having stored thereupon program codes, which are executable by a processor to perform the method of any of claims 1-7.

## Patentansprüche

1. Kommunikationsverfahren, das auf eine erste elektronische Steuereinheit, ECU, eines Fahrzeugs anwendbar ist, wobei das Fahrzeug ferner eine zweite ECU umfasst, wobei das Verfahren **gekennzeichnet ist durch**:
Senden erster Zustandsinformationen zur zweiten ECU, wenn Kommunikationszustandsinformationen der ersten ECU gegenüber der zweiten ECU die ersten Zustandsinformationen sind (S 110, S210, S310, S410), wobei die ersten Zustandsinformationen angeben, dass ein Kommunikationszustand zwischen der zweiten ECU und der ersten ECU ein unautorisierter Kommunikationszustand ist und dass die zweite ECU Kommunikationsverifizierung mit der ersten ECU durchführen muss;
Senden von Verifizierungsinformationen zur zweiten ECU, wenn eine von der zweiten ECU auf der Basis der ersten Zustandsinformationen gesendete Kommunikationsverifizierungsanforderung empfangen wird (S120, S220, S320, S420);
Empfangen von von der zweiten ECU auf der Basis der Verifizierungsinformationen (S130, S230, S330, S430) gesendeten Feedback-Informationen; und
Ändern, wenn die Feedback-Informationen einer voreingestellten Regel entsprechen, der Kommunikationszustandsinformationen in zweite Zustandsinformationen und Senden eines der zweiten ECU zugewiesenen Verschlüsselungsschlüssels zur zweiten ECU (S140, S240, S440), wobei die zweiten Zustandsinformationen angeben, dass der Kommunikationszustand zwischen der zweiten ECU und der ersten ECU ein autorisierter Kommunikationszustand ist, und wobei sich der Verschlüsselungsschlüssel jedes Mal von einem der zweiten ECU in einem vorherigen Kommunikationsverifizierungsprozess zugewiesenen Verschlüsselungsschlüssel unterscheidet und zum Verschlüsseln von Nachrichten in einem nachfolgenden Kommunikationsprozess zwischen der ersten ECU und der zweiten ECU konfiguriert ist.

2. Verfahren nach Anspruch 1, das ferner nach dem Schritt des Änderns der Kommunikationszustandsinformationen in die zweiten Zustandsinformationen, wenn die Feedback-Informationen mit der voreingestellten Regel übereinstimmen, und des Sendens des Verschlüsselungsschlüssels zur zweiten ECU (S240) Folgendes beinhaltet:
Empfangen einer von der zweiten ECU gesendeten verschlüsselten Nachricht (S250), wobei die verschlüsselte Nachricht von der zweiten ECU durch Verschlüsseln einer Nachricht mit dem Verschlüsselungsschlüssel und einem ersten Verschlüsselungsalgorithmus erhalten wird;
Entschlüsseln der verschlüsselten Nachricht mit dem Verschlüsselungsschlüssel und einem ersten Entschlüsselungsalgorithmus entsprechend dem ersten Verschlüsselungsalgorithmus, um die Nachricht zu erhalten (S260);
Feststellen, ob die Nachricht mit einer voreingestellten Nachrichtenregel übereinstimmt (S270); und
Ändern der Kommunikationszustandsinformationen in die ersten Zustandsinformationen, wenn die Nachricht nicht mit der voreingestellten Nachrichtenregel übereinstimmt (S280).

3. Verfahren nach Anspruch 2, das ferner nach dem Schritt des Änderns der Kommunikationszustandsinformationen in die ersten Zustandsinformationen, wenn die Nachricht nicht mit der voreingestellten Nachrichtenregel übereinstimmt S280), Folgendes beinhaltet:
Durchführen des Schritts des Sendens von ersten Zustandsinformationen zur zweiten ECU, wenn die Kommunikationszustandsinformationen der ersten ECU gegenüber der zweiten ECU die ersten Zustandsinformationen sind (S210), bis zu dem Schritt des Änderns der Kommunikationszustandsinformationen in die zweiten Zustandsinformationen und des Sendens eines Verschlüsselungsschlüssels zur zweiten ECU (S240), wenn die Feedback-Informationen mit einer voreingestellten Regel übereinstimmen.

4. Verfahren nach Anspruch 2, wobei die Nachricht einen Zählerwert umfasst und das genannte Feststellen, ob die Nachricht einer voreingestellten Nachrichtenregel entspricht (S270), Folgendes beinhaltet:
Feststellen, ob der Zählerwert um einen voreingestellten inkrementellen Wert im Vergleich zu einem historischen Zählerwert erhöht ist (S271A), wobei der historische Zählerwert ein in der letzten von der zweiten ECU gesendeten und von der ersten ECU empfangenen Nachricht geführter Zählerwert ist;
Feststellen, dass die Nachricht mit der voreingestellten Nachrichtenregel übereinstimmt, wenn der Zählerwert um den voreingestellten inkrementellen Wert im Vergleich zu dem historischen Zählerwert erhöht ist (S272A); und
Feststellen, dass die Nachricht nicht mit der voreingestellten Nachrichtenregel übereinstimmt, wenn der Zählerwert nicht um den voreingestellten inkrementellen Wert im Vergleich zu dem historischen Zählerwert erhöht ist (S273A).

5. Verfahren nach Anspruch 2, wobei die Nachricht einen Zeitstempel umfasst und das genannte Feststellen, ob die Nachricht einer voreingestellten Nachrichtenregel entspricht (S270), ferner Folgendes beinhaltet:
Feststellen, ob eine Zeitdifferenz zwischen dem Zeitstempel und einem in der letzten von der ersten ECU empfangenen Nachricht geführten historischen Zeitstempel kleiner als ein voreingestellter Schwellenwert ist (S271B);
Feststellen, dass die Nachricht der voreingestellten Nachrichtenregel entspricht, wenn die Zeitdifferenz kleiner als der voreingestellte Schwellenwert ist (S272B); und
Feststellen, dass die Nachricht nicht mit der voreingestellten Nachrichtenregel übereinstimmt, wenn die Zeitdifferenz nicht kleiner als der voreingestellte Schwellenwert ist (S273B).

6. Verfahren nach Anspruch 1, wobei die Feedback-Informationen Daten sind, die von der zweiten ECU durch Verschlüsseln der Verifizierungsinformationen mit einem ersten Schlüssel und einem zweiten Verschlüsselungsalgorithmus erhalten werden, und wobei das Verfahren ferner nach dem Empfang der von der zweiten ECU gesendeten Feedback-Informationen auf der Basis der Verifizierungsinformationen (S330) Folgendes beinhaltet:
Entschlüsseln der Daten mit dem ersten Schlüssel und einem zweiten Entschlüsselungsalgorithmus entsprechend dem zweiten Verschlüsselungsalgorithmus, um Zieldaten zu erhalten (S340);
Feststellen, ob die Zieldaten mit den Verifikationsinformationen übereinstimmen (S350);
Feststellen, dass die Feedback-Informationen mit der voreingestellten Regel übereinstimmen, wenn die Zieldaten mit den Verifizierungsinformationen übereinstimmen (S360); und
Feststellen, dass die Feedback-Informationen nicht mit der voreingestellten Regel übereinstimmen, wenn die Zieldaten nicht mit den Verifizierungsinformationen übereinstimmen (S370).

7. Verfahren nach einem der Ansprüche 1-6, das ferner Folgendes beinhaltet:
Ändern, wenn keine von der zweiten ECU gesendete verschlüsselte Nachricht empfangen wird, eine von der zweiten ECU gesendete Neustart-Nachricht empfangen wird oder ein Neustart der ersten ECU innerhalb einer voreingestellten Zeitspanne erkannt wird, der Kommunikationszustandsinformationen gegenüber der zweiten ECU in die ersten Zustandsinformationen (S450), wobei die Neustart-Nachricht so konfiguriert ist, dass sie darstellt, dass die zweite ECU innerhalb einer spezifizierten Zeitspanne neu gestartet wurde.

8. Kommunikationsgerät (500), das auf eine erste ECU eines Fahrzeugs anwendbar ist, wobei das Fahrzeug ferner eine zweite ECU umfasst, angegeben durch:
ein Zustandsinformations-Sendemodul (510), konfiguriert zum Senden erster Zustandsinformationen zur zweiten ECU, wenn Kommunikationszustandsinformationen der ersten ECU gegenüber der zweiten ECU die ersten Zustandsinformationen sind (S 110, S210, S310, S410), wobei die ersten Zustandsinformationen konfiguriert sind zum Angeben, dass ein Kommunikationszustand zwischen der zweiten ECU und der ersten ECU ein unautorisierter Kommunikationszustand ist und die zweite ECU eine Kommunikationsverifizierung mit der ersten ECU durchführen muss;
ein Verifizierungsinformations-Sendemodul (520), konfiguriert zum Senden von Verifizierungsinformationen zur zweiten ECU, wenn eine von der zweiten ECU auf der Basis der ersten Zustandsinformationen gesendete Kommunikationsverifizierungsanforderung empfangen wird (S120, S220, S320, S420);
ein Informationsempfangsmodul (530), konfiguriert zum Empfangen von von der zweiten ECU auf der Basis der Verifizierungsinformationen gesendeten Feedback-Informationen (S130, S230, S330, S430); und
ein Schlüsselverteilungsmodul (540), konfiguriert zum Ändern, wenn die Feedback-Informationen mit einer voreingestellten Regel übereinstimmen, der Kommunikationszustandsinformationen in zweite Zustandsinformationen und zum Senden eines der zweiten ECU zugewiesenen Verschlüsselungsschlüssels zur zweiten ECU (S140, S240, S440), wobei die zweiten Zustandsinformationen konfiguriert sind zum Angeben, dass der Kommunikationszustand zwischen der zweiten ECU und der ersten ECU ein autorisierter Kommunikationszustand ist, und wobei sich der Verschlüsselungsschlüssel jedes Mal von einem der zweiten ECU in einem vorherigen Kommunikationsverifizierungsprozess zugewiesenen Verschlüsselungsschlüssel unterscheidet und zum Verschlüsseln von Nachrichten in einem nachfolgenden Kommunikationsprozess zwischen der ersten ECU und der zweiten ECU konfiguriert ist.

9. Kommunikationsgerät (500) nach Anspruch 8, das ferner Folgendes umfasst:
ein Chiffretext-Empfangsmodul, konfiguriert zum Empfangen, nach dem Ändern der Kommunikationszustandsinformationen in die zweiten Zustandsinformationen, wenn die Feedback-Informationen mit der voreingestellten Regel übereinstimmen, und nach dem Senden des Verschlüsselungsschlüssels zur zweiten ECU, einer von der zweiten ECU gesendeten verschlüsselten Nachricht (S250), wobei die verschlüsselte Nachricht von der zweiten ECU durch Verschlüsseln einer Nachricht mit dem Verschlüsselungsschlüssel und einem ersten Verschlüsselungsalgorithmus erhalten wird;
ein Entschlüsselungsmodul, konfiguriert zum Entschlüsseln der verschlüsselten Nachricht mit dem Verschlüsselungsschlüssel und einem ersten Entschlüsselungsalgorithmus entsprechend dem ersten Verschlüsselungsalgorithmus, um die Nachricht zu erhalten (S260);
ein Nachrichtenbestimmungsmodul, konfiguriert zum Feststellen, ob die Nachricht mit einer voreingestellten Nachrichtenregel übereinstimmt (S270); und
ein Kommunikationszustandsinformations-Änderungsmodul, konfiguriert zum Ändern der Kommunikationszustandsinformationen in die ersten Zustandsinformationen, wenn die Nachricht nicht mit der voreingestellten Nachrichtenregel übereinstimmt (S280).

10. Kommunikationsgerät (500) nach Anspruch 9, wobei die Nachricht einen Zählerwert umfasst und das Nachrichtenbestimmungsmodul ferner konfiguriert ist zum:
Feststellen, ob der Zählerwert um einen voreingestellten inkrementellen Wert im Vergleich zu einem historischen Zählerwert erhöht ist (S271A), wobei der historische Zählerwert ein Zählerwert ist, der in der letzten von der zweiten ECU gesendeten und von der ersten ECU empfangenen Nachricht geführt wurde;
Feststellen, dass die Nachricht mit der voreingestellten Nachrichtenregel übereinstimmt, wenn der Zählerwert um den voreingestellten inkrementellen Wert im Vergleich zu dem historischen Zählerwert erhöht ist (S272A); und
Feststellen, dass die Nachricht nicht mit der voreingestellten Nachrichtenregel übereinstimmt, wenn der Zählerwert nicht um den voreingestellten inkrementellen Wert im Vergleich zum historischen Zählerwert erhöht ist (S273A).

11. Kommunikationsgerät (500) nach Anspruch 9, wobei die Nachricht einen Zeitstempel umfasst und das Nachrichtenbestimmungsmodul ferner konfiguriert ist zum:
Feststellen, ob eine Zeitdifferenz zwischen dem Zeitstempel und einem in der letzten von der ersten ECU empfangenen Nachricht geführten historischen Zeitstempel kleiner als ein voreingestellter Schwellenwert ist (S271B);
Feststellen, dass die Nachricht mit der voreingestellten Nachrichtenregel übereinstimmt, wenn die Zeitdifferenz kleiner als der voreingestellte Schwellenwert ist (S272B); und
Feststellen, dass die Nachricht nicht mit der voreingestellten Nachrichtenregel übereinstimmt, wenn die Zeitdifferenz nicht kleiner als der voreingestellte Schwellenwert ist (S273B).

12. ECU (600), die Folgendes umfasst:
einen oder mehrere Prozessoren (601);
Speicher (602); und
ein oder mehrere Programme, wobei die ein oder mehreren Programme im Speicher (602) gespeichert und zur Ausführung durch die ein oder mehreren Prozessoren (601) konfiguriert sind und die ein oder mehreren Programme zum Durchführen des Verfahrens nach einem der Ansprüche 1 bis 7 konfiguriert sind.

13. Fahrzeug mit einer Fahrzeugkarosserie und einer in der Fahrzeugkarosserie vorgesehenen ECU (600) nach Anspruch 12.

14. Computerlesbares Speichermedium, auf dem Programmcodes gespeichert sind, die von einem Prozessor zum Durchführen des Verfahrens nach einem der Ansprüche 1 bis 7 ausgeführt werden können.

## Revendications

1. Procédé de communication, applicable à une première unité de commande électronique, ECU, d'un véhicule, le véhicule comprenant en outre une seconde ECU, le procédé **caractérisé par** :
un envoi de premières informations d'état vers la seconde ECU lorsque des informations d'état de communication de la première ECU relatives à la seconde ECU sont les premières informations d'état (5110, S210, S310, S410), dans lequel les premières informations d'état indiquent qu'un état de communication entre la seconde ECU et la première ECU est un état non autorisé de communication et que la seconde ECU doit réaliser une vérification de communication avec la première ECU ;
un envoi d'informations de vérification vers la seconde ECU lorsqu'une demande de vérification de communication envoyée par la seconde ECU sur la base des premières informations d'état est reçue (S 120, S220, S320, S420) ;
une réception d'informations rétroactives envoyées par la seconde ECU sur la base des informations de vérification (S130, S230, S330, S430) ; et
lorsque les informations rétroactives sont conformes à une règle prédéfinie, une modification des informations d'état de communication en de secondes informations d'état et un envoi vers la seconde ECU d'une clé de chiffrement attribuée à la seconde ECU (S 140, S240, S440), dans lequel les secondes informations d'état indiquent que l'état de communication entre la seconde ECU et la première ECU est un état autorisé de communication et dans lequel, à chaque fois, la clé de chiffrement est différente d'une clé de chiffrement attribuée à la seconde ECU dans un processus de vérification de communication précédent et est configurée pour chiffrer des messages dans un processus de communication subséquent entre la première ECU et la seconde ECU.

2. Procédé selon la revendication 1, comprenant en outre, après l'étape de modification des informations d'état de communication en de secondes informations d'état lorsque les informations rétroactives sont conformes à la règle prédéfinie et d'envoi de la clé de chiffrement à la seconde ECU (S240) :
une réception d'un message chiffré envoyé par la seconde ECU (S250), dans lequel le message chiffré est obtenu à partir de la seconde ECU par chiffrement d'un message en utilisant la clé de chiffrement et un premier algorithme de chiffrement ;
un déchiffrage du message chiffré à l'aide de la clé de chiffrement et d'un premier algorithme de déchiffrage correspondant au premier algorithme de chiffrement pour obtenir le message (S260) ;
une détermination du fait que le message est conforme ou non à une règle de message prédéfinie (S270) ; et
une modification des informations d'état de communication en de premières informations d'état si le message n'est pas conforme à la règle de message prédéfinie (S280).

3. Procédé selon la revendication 2, comprenant en outre, après l'étape de modification des informations d'état de communication en de premières informations d'état si le message n'est pas conforme à la règle de message prédéfinie (S280) :
une réalisation de l'étape d'envoi de premières informations d'état à la seconde ECU lorsque des informations d'état de communication de la première ECU relatives à la seconde ECU sont les premières informations d'état (S210) jusqu'à l'étape, lorsque les informations rétroactives sont conformes à une règle prédéfinie, de modification des informations d'état de communication en de secondes informations d'état et un envoi à la seconde ECU d'une clé de chiffrement (S240).

4. Procédé selon la revendication 2, dans lequel le message comprend une valeur de compteur, et ladite détermination du fait que le message est conforme ou non à une règle de message prédéfinie (S270) comprend :
une détermination du fait que la valeur de compteur est augmentée d'une valeur incrémentale prédéfinie comparé à une valeur de compteur historique (S271A), dans lequel la valeur de compteur historique est une valeur de compteur transportée dans le dernier message envoyé par la seconde ECU et reçu par la première ECU ;
une détermination du fait que le message est conforme à la règle de message prédéfinie si la valeur de compteur est augmentée de la valeur incrémentale prédéfinie comparé à la valeur de compteur historique (S272A) ; et
une détermination du fait que le message n'est pas conforme à la règle de message prédéfinie si la valeur de compteur n'est pas augmentée de la valeur incrémentale prédéfinie comparé à la valeur de compteur historique (S273A).

5. Procédé selon la revendication 2, dans lequel le message comprend une référence temporelle, et ladite détermination du fait que le message est conforme ou non à une règle de message prédéfinie (S270) comprend en outre :
une détermination du fait qu'un écart de temps entre la référence temporelle et une référence temporelle historique transportée dans le dernier message reçu par la première ECU est inférieur à un seuil prédéfini (S271B) ;
une détermination du fait que le message est conforme à la règle de message prédéfinie si l'écart de temps est inférieur au seuil prédéfini (S272B) ; et
une détermination du fait que le message n'est pas conforme à la règle de message prédéfinie si l'écart de temps n'est pas inférieur au seuil prédéfini (S273B).

6. Procédé selon la revendication 1, dans lequel les informations rétroactives sont des données obtenues par la seconde ECU par chiffrement des informations de vérification à l'aide d'une première clé et d'un second algorithme de chiffrement, et dans lequel le procédé comprend en outre, après une réception des informations rétroactives envoyées par la seconde ECU sur la base des informations de vérification (S330) ;
un déchiffrage des données à l'aide de la première clé et d'un second algorithme de déchiffrage correspondant au second algorithme de chiffrement pour obtenir les données cibles (S340) ;
une détermination du fait que les données cibles correspondent aux informations de vérification (S350) ;
une détermination du fait que les informations rétroactives sont conformes à la règle prédéfinie si les données cibles correspondent aux informations de vérification (S360) ; et
une détermination du fait que les informations rétroactives ne sont pas conformes à la règle prédéfinie si les données cibles ne correspondent pas aux informations de vérification (S370).

7. Procédé selon l'une quelconque des revendications 1 à 6, comprenant en outre :
si aucun message chiffré envoyé par la seconde ECU n'est reçu, un message de redémarrage envoyé par la seconde ECU est reçu ou un redémarrage de la première ECU est détecté au sein d'une période de temps prédéfinie, une modification des informations d'état de communication relatives à la seconde ECU en de premières informations d'état (S450), dans lequel le message de redémarrage est configuré pour représenter le fait que la seconde ECU a été redémarrée au sein d'une période de temps spécifiée.

8. Dispositif de communication (500), applicable à une première ECU d'un véhicule, le véhicule comprenant en outre une seconde ECU, indiqué par :
un module d'envoi d'informations d'état (510), configuré pour envoyer de premières informations d'état vers la seconde ECU lorsque des informations d'état de communication de la première ECU relatives à la seconde ECU sont les premières informations d'état (S 110, S210, S310, S410), dans lequel les premières informations d'état sont configurées pour indiquer qu'un état de communication entre la seconde ECU et la première ECU est un état non autorisé de communication et que la seconde ECU doit réaliser une vérification de communication avec la première ECU ;
un module d'envoi d'informations de vérification (520), configuré pour envoyer des informations de vérification vers la seconde ECU lorsqu'une demande de vérification de communication envoyée par la seconde ECU sur la base des premières informations d'état est reçue (S 120, S220, S320, S420) ;
un module de réception d'informations (530), configuré pour recevoir des informations rétroactives envoyées par la seconde ECU sur la base des informations de vérification (S 130, S230, S330, S430) ; et
un module de distribution de clé (540), configuré pour, lorsque les informations rétroactives sont conformes à une règle prédéfinie, modifier des informations d'état de communication en de secondes informations d'état et envoyer vers la seconde ECU une clé de chiffrement attribuée à la seconde ECU (S 140, S240, S440), dans lequel les secondes informations d'état sont configurées pour indiquer que l'état de communication entre la seconde ECU et la première ECU est un état autorisé de communication et dans lequel, à chaque fois, la clé de chiffrement est différente d'une clé de chiffrement attribuée à la seconde ECU dans un processus de vérification de communication précédent et est configurée pour chiffrer des messages dans un processus de communication subséquent entre la première ECU et la seconde ECU.

9. Dispositif de communication (500) selon la revendication 8, comprenant en outre :
un module de réception de texte chiffré, configuré pour, après la modification des informations d'état de communication en de secondes informations d'état lorsque les informations rétroactives sont conformes à la règle prédéfinie et après l'envoi de la clé de chiffrement à la seconde ECU, recevoir un message chiffré envoyé par la seconde ECU (S250), dans lequel le message chiffré est obtenu à partir de la seconde ECU par chiffrement d'un message en utilisant la clé de chiffrement et un premier algorithme de chiffrement ;
un module de déchiffrage, configuré pour déchiffrer le message chiffré à l'aide de la clé de chiffrement et d'un premier algorithme de déchiffrage correspondant au premier algorithme de chiffrement pour obtenir le message (S260) ;
un module de détermination de message, configuré pour déterminer le fait que le message est conforme ou non à une règle de message prédéfinie (S270) ; et
un module de modification d'informations d'état de communication, configuré pour modifier les informations d'état de communication en de premières informations d'état si le message n'est pas conforme à la règle de message prédéfinie (S280).

10. Dispositif de communication (500) selon la revendication 9, dans lequel le message comprend une valeur de compteur, et le module de détermination de message est en outre configuré pour :
déterminer le fait que la valeur de compteur est augmentée d'une valeur incrémentale prédéfinie comparé à une valeur de compteur historique (S271A), dans lequel la valeur de compteur historique est une valeur de compteur transportée dans le dernier message envoyé par la seconde ECU et reçu par la première ECU ;
déterminer le fait que le message est conforme à la règle de message prédéfinie si la valeur de compteur est augmentée de la valeur incrémentale prédéfinie comparé à la valeur de compteur historique (S272A) ; et
déterminer le fait que le message n'est pas conforme à la règle de message prédéfinie si la valeur de compteur n'est pas augmentée de la valeur incrémentale prédéfinie comparé à la valeur de compteur historique (S273A).

11. Dispositif de communication (500) selon la revendication 9, dans lequel le message comprend une référence temporelle, et le module de détermination de message est en outre configuré pour :
déterminer si un écart de temps entre la référence temporelle et une référence temporelle historique transportée dans le dernier message reçu par la première ECU est inférieur à un seuil prédéfini (S271B) ;
déterminer le fait que le message est conforme à la règle de message prédéfinie si l'écart de temps est inférieur au seuil prédéfini (S272B) ; et
déterminer le fait que le message n'est pas conforme à la règle de message prédéfinie si l'écart de temps n'est pas inférieur au seuil prédéfini (S273B).

12. ECU (600), comprenant :
un ou plusieurs processeurs (601) ;
une mémoire (602) ; et
un ou plusieurs programmes, dans laquelle les un ou plusieurs programmes sont stockés dans la mémoire (602) et configurés pour être exécutés par les un ou plusieurs processeurs (601), et les un ou plusieurs programmes sont configurés pour réaliser le procédé selon l'une quelconque des revendications 1 à 7.

13. Véhicule comprenant un corps de véhicule et une ECU (600) selon la revendication 12 fournie dans le corps de véhicule.

14. Support de stockage lisible par ordinateur présentant stocké dessus des codes de programme, qui sont exécutables par un processeur pour réaliser le procédé selon l'une quelconque des revendications 1 à 7.
